# EUROPEAN PATENT SPECIFICATION

(11) **EP 3 205 127 B1**
(45) Date of publication and mention of the grant of the patent: **08.01.2020**
(21) Application number: 15849443.5
(22) Date of filing: 06.10.2015
(51) Int. Cl.: H04W 4/00, G01S 5/02

(54) **A METHOD OF SETTING UP A TRACKING SYSTEM**
VERFAHREN ZUR EINSTELLUNG EINES VERFOLGUNGSSYSTEMS
PROCÉDÉ D'INSTALLATION D'UN SYSTÈME DE SUIVI

(30) Priority: 07.10.2014 AU 2014903993
(43) Date of publication of application: 16.08.2017
(73) Proprietor: Commonwealth Scientific and Industrial Research Organisation, Acton, ACT 2601 (AU)
(72) Inventor: HEDLEY, Mark, Greenwich NSW 2065 (AU); FLICK, Paul, Kenmore QLD 4069 (AU)
(74) Representative: Gill Jennings & Every LLP
(86) International application number: PCT/AU2015/050606
(87) International publication number: WO 2016/054691

(56) References cited:
- WO-A1-2007/051972
- WO-A1-2013/171679
- US-A1- 2006 025 154
- US-A1- 2011 074 569
- ANDREAS RICHTER: "Joint map estimation and localization using distance measurements to landmarks with unknown location", 2010 44TH ASILOMAR CONFERENCE ON SIGNALS, SYSTEMS AND COMPUTERS - 7-10 NOV. 2010 - PACIFIC GROVE, CA, USA, IEEE, PISCATAWAY, NJ, USA, 7 November 2010 (2010-11-07), pages 2003-2007, XP031860906, DOI: 10.1109/ACSSC.2010.5757897 ISBN: 978-1-4244-9722-5
- RICHTER, A.: 'Joint Map Estimation and Localization using Distance Measurements to Landmarks with Unknown Location' 44TH IEEE CONFERENCE ON SIGNALS, SYSTEMS AND COMPUTERS (ASILOMAR 07 November 2010, pages 2003 - 2007, XP031860906

## Description

### FIELD OF THE INVENTION

The present invention relates to a method of setting up a range-based tracking system utilising a tracking coordinate system and more particularly to a method of simplified deployment of a wireless tracking system to track the location of one or more mobile nodes within a tracking environment.

### BACKGROUND

Any discussion of background art throughout the specification should in no way be considered as an admission that such art is widely known or forms part of the common general knowledge in the field.

Wireless tracking systems generally refer to systems that track or locate a transmitter using wireless technologies, including transmission and reception of electromagnetic signals. Tracking is beneficial in many practical applications to enhance safety or productivity, for consumer location-based services and to facilitate the delivery of sporting or entertainment services. More particularly, the knowledge of the location of people and mobile equipment over a period of time may be used to enhance the safety of people on a work site. Knowing the location of patients within a hospital or care facility enables assistance to rapidly reach them if they should go missing, fall or press a panic button. Tracking the location of people within a building may allow security staff to be alerted if a person enters an area to which they are not authorised. Tracking the location of emergency services personnel enhances their safety by enabling assistance to be rapidly dispatched via a known route to the correct location if required. Tracking athletes during sporting events or training provides valuable information for coaches for training and rehabilitation, and well as for use by the electronic media.

A number of wireless tracking techniques are known, including the use of received signal strength (RSS), the use of measurement of time of arrival (TOA), the measurement of time difference of arrival (TDOA), and the measurement of angle of arrival (AOA).

A typical range-based tracking system consists of stationary reference nodes installed at fixed and known locations, and mobile nodes attached to the objects being tracked. The distance (range) between each mobile node and local reference nodes is measured using wireless signals, and from this the location of each mobile node can be determined using the well-known principles of multilateration. To set up a range-based tracking system, it is necessary to know the precise location of the stationary nodes. While the principle of operation of other systems differs, it is also necessary for other types of system (e.g. RSS, TDOA, AOA) to know the precise locations of the stationary nodes. This is normally done by accurately measuring the position of the stationary nodes by hand or with the use of a total station or similar device. A major impediment to the use of such systems is thus the skill and time required to set up the network, particularly undertaking a survey to determine the location of the stationary reference nodes, and providing a map in a common coordinate system.

ANDREAS RICHTER: "Joint map estimation and localization using distance measurements to landmarks with unknown location", 2010 44TH ASILOMAR CONFERENCE ON SIGNALS, SYSTEMS AND COMPUTERS - 7-10 NOV. 2010 - PACIFIC GROVE, CA, USA, IEEE, PISCATAWAY, NJ, USA, 7 November 2010 (2010-11-07), pages 2003-2007, XP031860906, DOI: 10.1109/ACSSC.2010.5757897, ISBN: 978-1-4244-9722-5 describes determining the location of a set of fixed nodes, e.g. access-points or base-stations in a wireless network using only distance measurements acquired by a node moving in the vicinity of the fixed nodes. It is assumed, that no prior information about locations of any of the nodes (fixed or mobile) is available, i.e. no anchor nodes exist. It is shown that, under some mild conditions on the distribution and the number of nodes, the map of the fixed nodes as well as the locations of the mobile node(s) in this map can be identified unambiguously from ranging measurements. A closed form algorithm is derived to estimate the map.

### SUMMARY OF THE INVENTION

The invention is defined by the independent claims. According to a first aspect of the invention, there is provided a method of setting up a tracking system as set out in appended claim 1.

The term "independent localisation system" is to be taken to mean a system capable of determining its own location or the location of a component of the system, independent of the tracking system being set up.

According to a second aspect of the invention, there is provided a system for setting up a tracking system as set out in appended claim 13.

It will be appreciated that the broad forms of the invention and their respective features can be used in conjunction, interchangeably and/or independently, and reference to separate broad forms is not intended to be limiting.

### BRIEF DESCRIPTION OF THE DRAWINGS

Embodiments of the invention will now be described, by way of example only, with reference to the accompanying drawings, in which:
Figure 1 is a plan view of an example of a range-based tracking system set up to track the location of personnel and/or vehicles around a mine site, illustrating an embodiment of the invention;
Figure 2 is a schematic system level overview of the system of Figure 1;
Figure 3 is a part block diagram, part schematic diagram illustrating components of a system for carrying out an embodiment of the invention; and
Figure 4 is a general flow diagram illustrating a method of setting up a range-based tracking system according to an embodiment of the invention.

### DETAILED DESCRIPTION

Before turning to a discussion of a method of setting up a tracking system, an example of a range-based tracking system will first be described in overview, followed by a brief description of an example of an independent localisation system including an independent localisation device. The tracking system and the independent localisation system described below have been selected for the purpose of providing examples. It will be clear to the person skilled in the art that the invention is not limited to range-based systems; it is applicable to a variety of systems requiring a plurality of spaced-apart stationary nodes, including range-based, RSS-based, AOA-based and TDOA-based systems.

### Overview of an example of a range-based tracking system

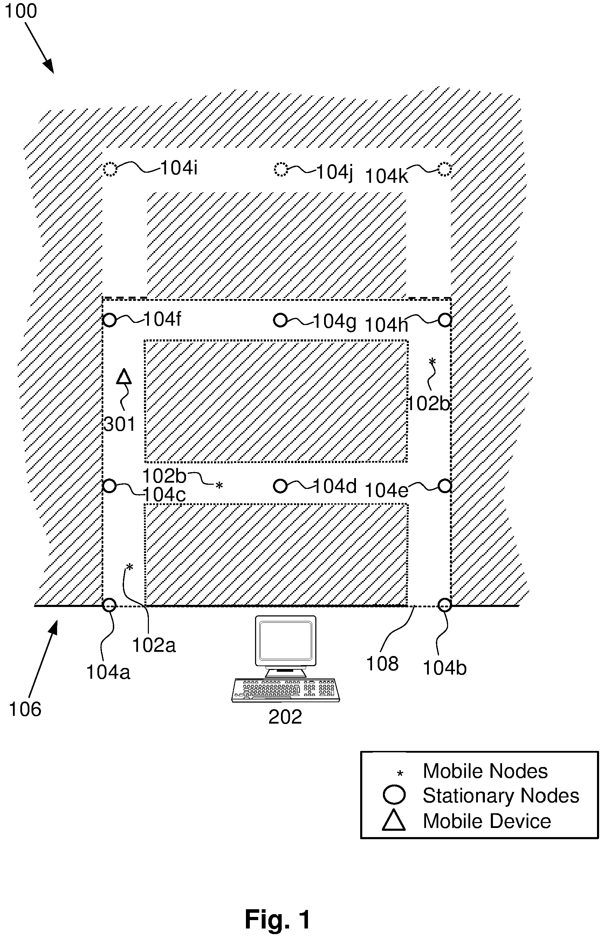

Figure 1 illustrates an example of a tracking system 100, in the form of a wireless local positioning system that tracks one or more mobile nodes 102 using stationary reference nodes 104 that are required to be at known locations. Such a system is disclosed in the international patent application published with number WO2010/000036, the description and drawings of which are incorporated herein.

The system described here is configured for the tracking of personnel and/or vehicles (not shown) around a mine 106. The tracking system is then able to use a map and a common coordinate system generated by the independent localisation system, as described below, to display the locations of mobile nodes (and hence people and vehicles) and/or to trigger automated interventions such as alerts or alarms to people or vehicles entering a predetermined area, or to other personnel of such events. As noted elsewhere, however, the invention is not limited to this specific application. Other potential fields of application include tracking workers, equipment and hazards in and around a construction site, tracking employees within a business location, tracking fire-fighters and other emergency personnel within a building or hazardous area and tracking customers and/or shopping carts in a shopping mall. In these other applications, the tracking hardware used may be different to that described herein. For example, wireless nodes used to track vehicles may be connected to the vehicle's battery. Some additional features arising in the application of the invention to other fields will also be discussed below.

In system 100, the personnel/vehicles each carry a wireless battery operated mobile node. Three mobile nodes 102a-c are shown in Figure 1 and are illustrated as '*' symbols. Mobile nodes 102 each include respective transceivers, processors and non-transient memory. These can be of any appropriate form and can include for example a microprocessor, microchip processor, or the like, operating in accordance with software instructions stored in the memory and/or could include a logic gate configuration, firmware optionally associated with implementing logic such as an FPGA (Field Programmable Gate Array), or any other electronic device, system or arrangement. It will also be appreciated that, although system 100 is being described with reference to three mobile nodes 102a-c, in other embodiments a different number of nodes are tracked, the number being determined by the number of personnel and/or vehicles whose position it is desired to know.

A plurality of stationary reference nodes is deployed in roadways 105 (for example, gateroads) of the mine 106 (or more generally the tracking environment). System 100 includes eight spatially-separated wireless stationary nodes 104a-h (illustrated as circle symbols), each including respective transceivers, processors and non-transient memory. These can be of any appropriate form and can include for example a microprocessor, microchip processor, or the like, operating in accordance with software instructions stored in the memory and/or could include a logic gate configuration, firmware optionally associated with implementing logic such as an FPGA (Field Programmable Gate Array), or any other electronic device, system or arrangement. The stationary nodes 104 are disposed throughout the mine 106, at any convenient location within the roadways 105 so long as they are within a sufficient range to permit communication between at least some of the other nodes. Typically, stationary nodes 104 are positioned around and/or throughout a tracking environment such that, during tracking, a mobile node within the environment is within range of two or more of the stationary nodes. In larger tracking environments and in environments with significant barriers to line-of-sight communication between nodes, the number of stationary nodes 104 may be increased to ensure this.

Mobile nodes 102 can be constructed physically smaller and lighter than the stationary nodes 104, for example allowing these to be easily attached to vehicles and to minimise the discomfort when worn by personnel. Stationary nodes 104, by comparison, are typically larger, having increased connectivity and functionality and a larger battery. Mobile node hardware can also be used to perform the role of a stationary node.

In various embodiments, the mobile and stationary nodes 102, 104 include rechargeable or single-use batteries. In other embodiments, however, at least some of the mobile and stationary nodes are not directly battery operated but are electrically connected to a power source. By way of example, the stationary nodes deployed around the mine 106 are powered through wired electrical connections into power distribution infrastructure, where available, or otherwise by associated batteries. Mobile nodes which are carried by a vehicle may be powered by the vehicle.

In future implementations, embodiments are envisaged wherein one or more of the mobile nodes or transceivers are Smartphones. Such applications for these implementations include tracking customers through a shopping mall and tracking visitors to an exhibition or trade show.

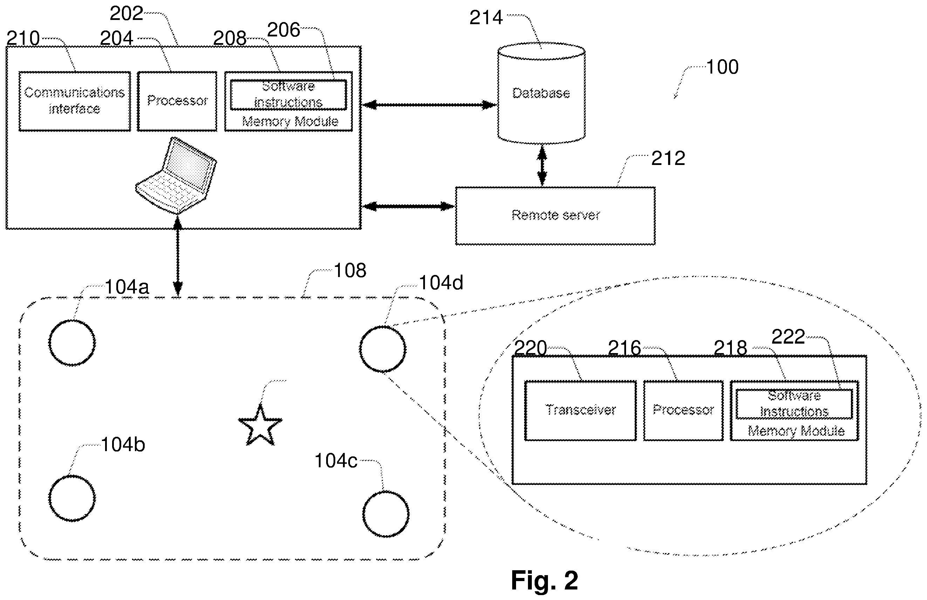

A system-level overview of system 100 is illustrated schematically in Figure 2. For simplicity, only four stationary nodes 104a-d and one mobile node 102a are illustrated. A network is established between the various stationary nodes and an arbitrary back-end computer system 202. In some embodiments, the stationary nodes communicate through a wired network or a network including a combination of wireless and wired communications. In some cases, the various nodes need not communicate directly but may communicate indirectly through intermediate nodes in the network.

In various embodiments, computer system 202 can take different forms, including a single computer networked with the stationary nodes, multiple processors associated with the stationary nodes or some or all of the stationary nodes themselves. In some embodiments, computer system 202 is realised as more than one computer to utilise better signal coverage and redundancy. In embodiments where some or all of the stationary nodes in the system perform the function of computer system 202, no separate computer is required.

Computer system 202 includes a processor 204 configured to run executable software instructions 206 that, amongst other functionalities, facilitates a method of setting-up of the range-based tracking system for tracking mobile nodes 102. During the subsequent operational stage, computer system 202 is configured to determine and monitor mobile node locations and optionally display these on a display (either associated with computer system 202 or in communication with computer system 202 through a network).

Processor 204 is coupled to a memory module 208 and a communications interface 210. Interface 210 includes a USB port for communicating with stationary nodes 204 through a USB connection (not shown). In other embodiments, interface 210 includes other connections such as an Internet connection, modem, Ethernet port, wireless network card, serial port, or the like and is able to also communication with a remote server 212. In other embodiments distributed resources are used. For example, in one embodiment, computer system 202 includes a plurality of distributed servers having respective storage, processing and communications resources. Memory module 208 includes software instructions 206, which, as mentioned, are executable on processor 204. In some embodiments, computer system 202 is coupled to an associated database 214, which is in turn coupled to server 212. In further embodiments the database leverages memory module 208.

Accordingly, it will be appreciated that the computer system 202 may be formed from any suitable processing system, such as a suitably programmed client device, PC, web server, network server, or the like. In one particular example, the computer system 202 is a standard processing system such as an Intel Architecture based processing system, which executes software applications stored on non-volatile (e.g., hard disk) storage, although this is not essential. However, it will also be understood that the processing system could be any electronic processing device such as a microprocessor, microchip processor, logic gate configuration, firmware optionally associated with implementing logic such as an FPGA (Field Programmable Gate Array), or any other electronic device, system or arrangement. It will also be appreciated that whilst the computer system 202 is shown as a single entity, this is not essential, and functionality could be distributed across one or more processing devices, for example that are provided as part of a cloud based environment.

Following the setting up of the tracking system as described in more detail below, system 100 facilitates obtaining location data of the mobile nodes throughout the mine 106 in an operational stage. The mobile nodes transmit data to computer system 202 to enable the mobile node locations to be computed. In other embodiments, the locations of the mobile nodes are computed by the mobile nodes themselves. Software instructions 206 are implemented as part of a software application for setting up tracking field 108 and obtaining location data of the mobile nodes. In some embodiments, each of the stationary and mobile nodes in turn includes a local processor 216 coupled to a local memory module 218 and a transceiver 220. Memory module 218 includes software instructions 222 which are executable on local processor 216 to obtain location data. The location data is processed and stored in database 214. In some embodiments, processing of the location data is performed at server 212.

In some embodiments, the processor is located within one or more of the various stationary or mobile nodes. In these embodiments, remote computers are able to connect to the processor to extract the location data generated by the tracking process.

### Overview of an example of an independent localisation system

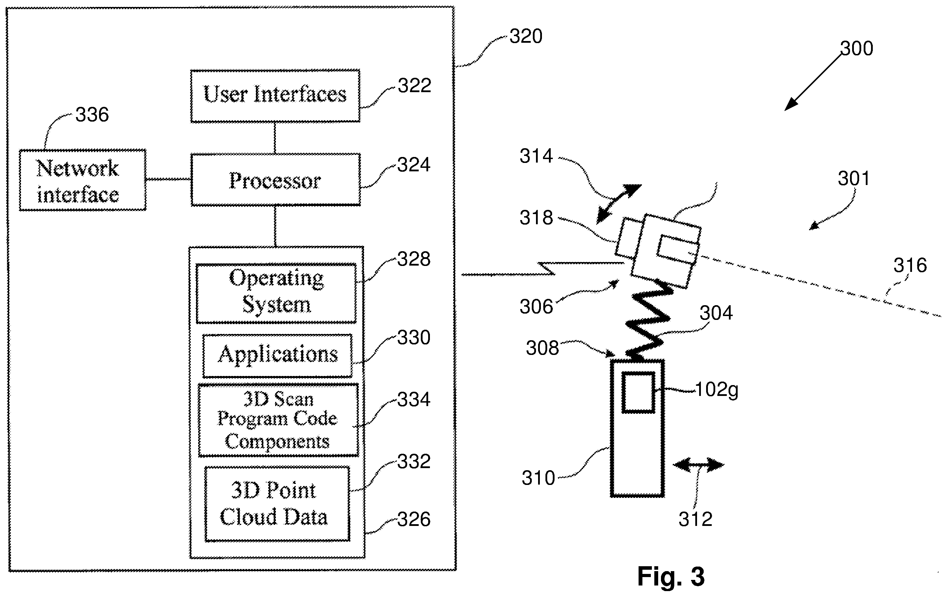

Figure 3 illustrates an example of an independent localisation system 300 of the type which is capable of simultaneously generating a map of an environment and determining the location of a mobile device of the system (perhaps including the whole system) within the map. The problem of simultaneous localisation and mapping (SLAM) has been widely researched for robotic application, and systems developed that generate a map of their environment as they move through it, and at the same time determine their own location within that environment. The various systems use a range of sensors, including video cameras, ultrasonic sensors and laser scanners. An example of such a system is described in the international patent application published with number WO2012/012819, the description of which is incorporated herein. It will be clear to the person skilled in the art, however that this particular system is being described by way of example only and that other independent localisation systems, preferably simultaneous localisation and mapping systems, may be used.

With reference to Figure 3, the independent localisation system 300 includes a mobile device 301 in turn including a ranging apparatus in the form of a 2D laser beam scanner 302, and a reactive linkage mechanism in the form of a coil spring 304. A first end of 306 of the coil spring 304 is connected to the 2D laser beam scanner 302. A second end 308 of the coil spring 304 is connected to an object in the form of a handle 310. During traversal of a tracking environment by the mobile device 301, translation acceleration (as indicated by arrows 312) of the object 310 is then converted by the reactive linkage mechanism to rotational motion (as indicated by arrows 314) of the 2D laser beam scanner 302 with respect to the object 310, which increases the field of view of the scanner with reference to the tracking environment. The scanner is then able to obtain data that defines the three-dimensional scan of the tracking environment for use by a computer system 320, described below, in generation of a map of the tracking environment.

A commercial embodiment of such a mobile sensing device is the "Zebedee" handheld 3-D mapping system produced by CSIRO. The Zebedee device includes a two-dimensional (2D) LiDAR range scanner, an Inertial Measurement Unit (IMU) spring mounted on a handle. When an operator moves with the device, the scanner loosely oscillates on the spring, producing a rotation that extends the LiDAR's 2D field of view into a 3D view of the environment. The IMU along with a Simultaneous Localization and Mapping (SLAM) solution keep track of the environment and position of the device without the need for an absolute positioning system such as Global Positioning System (GPS). Once a scan is complete, the data may be processed to produce a 3D point cloud of the area mapped by the operator.

It will be appreciated however that this is not intended to be limiting and any suitable sensing device capable of capturing data, which can in turn be used to determine a position of the sensing device relative to the structure can be used. In this regard, a number of smart phones in commercial development include stereoscopic cameras, which when used with suitable processing can produce range data, and the position of the sensing device for example through inbuilt position and orientation sensing, and/or through appropriate image processing. Other suitable processing, such as monocular SLAM, or the like could be used.

In the present embodiment, as noted above, the object is a handle 310 by which the mobile device 301 may be carried by a person. In other embodiments, the object may be a helmet to be worn by a person or a mounting by which the device 301 may be affixed to a vehicle, pushcart, animal, etc. The appropriate configuration will depend upon the environment and other factors.

As discussed in further detail below, the handle 310 of the mobile device 301 includes a mobile node 102g of the tracking system 100 to be set up.

The independent localisation system further includes a computer system 320 for defining a 3D point cloud. The computer system 320 comprises user interfaces 322 operatively coupled to at least one processor 324. A memory 326 is also operatively coupled to the processor 324. The memory 326 stores an operating system 328, applications 330 and 3D point cloud data 332. The user interfaces 322 can be a combination of user interfaces including, for example, but not limited to, a keypad and a graphical user interface (GUI) such as a computer display screen. A network interface card 336 enables the computer system 320 to be operatively coupled to an electronic communication network such as the Internet, or to the system mobile device 301 via a wired or wireless connection 338. The memory 326 also includes computer readable and executable program code components 334 that define a registration algorithm. For example, when program code components 334 are processed by the processor 324, the components are configured to cause execution of a method for obtaining a 3D map of an environment, including the locus of positions of the mobile device 301 within the environment, as described in WO2012/012819.

Accordingly, it will be appreciated that the computer system 320 may be formed from any suitable processing system, such as a suitably programmed client device, PC, web server, network server, or the like. In one particular example, the computer system 320 is a standard processing system such as an Intel Architecture based processing system, which executes software applications stored on non-volatile (e.g., hard disk) storage, although this is not essential. However, it will also be understood that the processing system could be any electronic processing device such as a microprocessor, microchip processor, logic gate configuration, firmware optionally associated with implementing logic such as an FPGA (Field Programmable Gate Array), or any other electronic device, system or arrangement.

In one example, the computer system 320 is separate from, but in communication with the mobile sensing device 301. However, this is not essential, and alternatively the same functionality could be provided by a processing device incorporated into the mobile sensing device 301. Additionally, and/or alternatively, at least one of the processing devices could be part of a distributed processing arrangement, with some of the functionality being performed on board the mobile sensing device 301 and other functionality being provided remote thereto, for example on a remote computer system or the like.

It will also be noted that whilst reference is made to separate computer systems 202, 320 for the tracking and localisation systems, this is not essential and one or more common computer or other processing systems could be used.

### Description of a method of setting up a tracking system

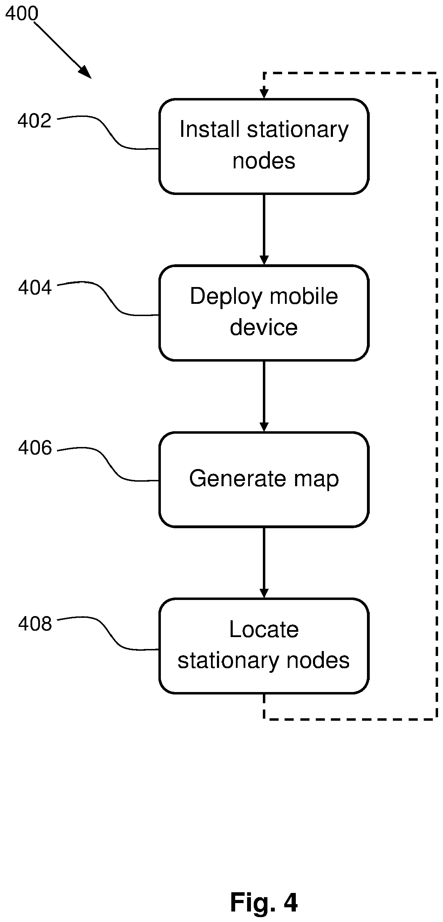

Figure 4 illustrates an embodiment of a method 400 of setting up a tracking system, including using an independent localisation system 300 to determine respective locations of at least a subset of the stationary nodes 104 within the tracking environment.

At step 402, stationary nodes 104a-h of the tracking system 100 are installed in the roadways 105. At step 404, a mobile device 301 of an independent localisation system 300 is deployed in the tracking environment. While the mobile device is in the tracking environment, at step 406, the independent localisation system 300 generates a map of the tracking environment and, at step 408, the locations of at least a subset of the stationary nodes 104 is determined.

In more detail, at step 404, the mobile device 301 is caused to explore the tracking environment, for example, by being carried by a person or animal, or by being mounted on a manned, remotely-operated or autonomous vehicle around the environment. "Explore" in this context is to be taken to mean moved, whether continuously or discontinuously, including any or all of rotation, elevation and translation such that the existence and location of at least some of a set of stationary nodes 104 located within the tracking environment are discovered as discussed below. In some embodiments, a plurality of mobile devices 301 are used.

At step 408, the locations of at least a subset of the stationary nodes is determined. To facilitate this, the mobile device 301 of the independent localisation system 300 has associated therewith a mobile node 102g (see Figure 3) of the tracking system 100. In the present embodiment, the mobile node 102g associated with the mobile device 301 is incorporated within the handle 310 of the mobile device 301. In other embodiments, some other form of association may be appropriate, provided that the mobile node is associated with the mobile device in a known spatial relationship. The mobile node 102g associated with the mobile device 301 is time synchronised with the independent localisation system 300 such that activity of the two systems may be time-correlated.

Accordingly, as the mobile device 301 traverses the tracking environment, the computer system 320 uses ranging information derived from the onboard sensors to establish a map of the tracking environment, in the form of a 3D point cloud, and locations of the mobile device 301 within the tracking environment as it moves through the tracking environment. This can take the form of a continuous path reflecting movement of the mobile device, or a sequence of time stamped locations.

As the mobile device 301 explores the roadways 105, the locations of stationary nodes 104 are determined relative to the position or trajectory of the mobile device in the following manner. As the mobile device moves through the roadways, signals are transmitted between the mobile node 102g associated with the mobile device 301 and a stationary node to enable determination of ranges between the mobile device 301 and a stationary node 104. In the present embodiment, ranges are determined with reference to the time of arrival of signals transmitted between the mobile node 102g and the stationary nodes 104, as discussed in WO2010/000036.

The, as the mobile device traverses the tracking environment, the computer system 202 can establish range information corresponding to ranges between the mobile node 102g and the stationary nodes 104.

As the tracking system 100 and the independent localisation system 200 are time synchronised in the present embodiment, the location of the mobile device 301 at the time of each range determination is known. In the present, range-based embodiment, the location of the stationary node is then determined by multilateration. The location of the stationary node relative to the mobile device is determined using an algorithm which estimates the location of a stationary node by minimising the sum of the square of differences between the determined ranges and the estimated ranges assuming the stationary node is at the estimated location.

Thus, the computer systems 202, 320, which as previously mentioned can be a common computer system, use the location of the mobile device 301 within the tracking environment at a given time, and knowledge of the range between the mobile node and stationary node at the same time, to ascertain the location of the stationary nodes within the tracking environment.

In the preferred embodiment, ranges greater than a predetermined threshold are discarded prior to determining the location of the stationary node. In at least some circumstances, this discarding can have the advantages of reducing computational complexity by reducing the number of the subsequent location determination, and of reducing the consideration of ranges arising from non-line-of-sight measurements, which are more frequent at longer range.

The estimate of the location of the stationary node is obtained by the following steps: for each of the ranges, estimating the location of said stationary node and an error in the location estimate excluding the current range; discarding the range whose exclusion gave the lowest error estimate, if the lowest error estimate is less than a threshold; repeating the estimating and discarding until the lowest error estimate is not less than the threshold or until the number of undiscarded ranges reaches a minimum number; and estimating the location of the stationary node from the undiscarded ranges. More detail regarding this algorithm may be found in WO2010/000036.

This determination of the location of a stationary node is repeated for at least a subset of the stationary nodes of the tracking system.

A common tracking coordinate system is established with reference, for example, to an arbitrary datum such as the starting point of the mobile device's traversal of the tracking environment. In embodiments such as the present one in which the independent localisation system is capable of generating a map of the tracking environment, the map is also determined with reference to the common coordinate system. The locations of the stationary nodes within the common coordinate system are determined so that, when the tracking system is operated to track mobile nodes, the locations of the mobile nodes within the common coordinate system can be determined.

Once set up as discussed above, the tracking system may be used to track the location of the mobile nodes 102. During operation, however, the configuration of a mine changes as material is extracted, as old roadways are allowed to collapse or as new roadways are created. Figure 1 shows a section of roadway 110 which is created during operation of the mine (and hence during operation of the tracking system 100 to track mobile nodes within the mine). During or following creation of the new roadway 110, further stationary nodes 104i-k are installed, and the mobile device 301 of the independent localisation system is caused to explore the roadways of the mine (including the new roadway 110) to update the map of the mine and to determine the locations of new stationary nodes 104i-k, thereby expanding the tracking field 108. In some such embodiments, this renewed exploration of the tracking environment is repeated periodically; in others it is repeated at variable intervals dependent upon changes to the environment.

### Variations and alternatives

In the preferred embodiment described above, ranges between the mobile device 301 and the stationary nodes 104 are determined using time of arrival of signals transmitted between the mobile node 102g associated with the mobile device 301 and the stationary nodes 104. In a number of alternative embodiments, the ranges are determined using received signal strength of signals transmitted between the mobile node associated with the mobile device and the stationary nodes, for example using wireless protocols such as the 802.11 family of protocols, Zigbee or Bluetooth. In one such embodiment, the method includes generating a database of received signal strengths for signals between the stationary nodes and the mobile node associated with the mobile device when located at various locations within the tracking environment. In a further such embodiment, the method includes generating a propagation model for the tracking system and using the model to estimate the respective ranges between the mobile node associated with the mobile device and the stationary nodes. There are other embodiments which are not based upon determination of ranges between nodes, which operate, for example, based upon received signal strength of signals between nodes, angle of arrival of signals between nodes or time difference of arrival of signals between nodes. In the preferred general case, the locations of the stationary nodes of the tracking system are determined during the setup phase using the same technique as the locations of mobile nodes are determined during the operation phase of the tracking system.

In the preferred embodiment described above, the location of stationary nodes is determined by multilateration based upon ranges between the mobile device at different locations and the stationary node. In alternative embodiments, other means are used. For example, in some embodiments, the stationary nodes 204 include, or have associated with them, respective visual markers (not shown), for example of predetermined shape and, for example, including visual information for identifying the stationary node, which are identifiable by the computer system 320 of the independent localisation system. In such embodiments, the computer system 320 includes in applications 330 program code components for computer vision and recognition of the markers. In one such embodiment, the markers are detachable from the stationary nodes so that they may be detached during operation of the tracking system for tracking mobile nodes. In another embodiment, the markers associated with the stationary nodes are RFID tags and the mobile device 301 includes an RFID tag reader. In such an embodiment, the mobile device is able to detect the proximity of a stationary node when it reads the RFID tag attached to the stationary nodes. In one such embodiment, the independent localisation system determines the location of the stationary node to be the average (optionally, the weighted average) of the positions of the mobile device at which the RFID tag is read.

In the preferred embodiment described above, the independent localisation system is a system for simultaneous localisation and mapping, such as that described in WO2012/012819. It will be clear to the person skilled in the art that other systems for simultaneous localisation and mapping may also be used, provided that they are capable of determining the locations of the stationary nodes, for example by one of the methods disclosed herein. In alternative embodiments, the independent localisation system is, or includes, other localisation equipment such as a GPS receiver, a total station or Vicon laser tracker, for example. In further embodiments, the generation of a map of the tracking environment is performed by separate means such as a tripod scanner or a mobile mapping cart or vehicle, for example.

In the preferred embodiment described above, with reference to Figure 4, the steps 404, 406, 408 of deploying the mobile device 301 to explore the tracking environment, generating a map of the environment and determining the location of the stationary nodes 104 are described as occurring sequentially in that order. In another embodiment, steps 406 and 408 are reversed in order. In a further embodiment, steps 404 and 406 are performed simultaneously or in overlapping time periods. In a further embodiment, steps 406 and 408 are performed simultaneously or in overlapping time periods. In a further embodiment, steps 404 and 408 are performed simultaneously or in overlapping time periods. In a further embodiment, steps 404, 406 and 408 are performed simultaneously or in overlapping time periods. In a further embodiment, steps 402, 404, 406 and 408 are performed simultaneously or in overlapping time periods. In yet further embodiments, particularly embodiments for use in environments which develop or otherwise change over time, the method includes repetition of some or all of the steps listed above. To exemplify some of the further embodiments noted here, stationary nodes may be installed at the commencement of mining operations at a mine site by one operative, while another operative causes the mobile device of the independent localisation system to explore the tracking environment, generating a map and simultaneously determining the locations of the stationary nodes. Once the initially-installed nodes have been located, the method pauses (that is to say, the method of setting up the system pauses; the system itself may be operational during this period). Later, however, when the mine site has developed, more stationary nodes are installed, and the mobile device is periodically, or otherwise repeatedly or continuously, caused to explore the expanding tracking environment.

In one embodiment, the approximate location of at least some of the stationary nodes is known a priori (for example because they are visible to an operator of the system). In another embodiment, at least an approximate location of the location of at least some of the stationary nodes is determined during the traversal of the tracking environment by the mobile device. In preferred such embodiments, the mobile device is caused to traverse a path which results in the obtaining of multiple ranges to the stationary nodes from multiple directions with the aim of obtaining good geometrical dilution of precision and, hence, good localisation accuracy. For example, in an environment where the stationary nodes are not coplanar and/or three-dimensional localisation of nodes will be required, the mobile device may be caused to traverse a path in the form generally of a spiral projected onto the surface of a sphere centred on the approximate location of each stationary node for which an approximate location is available. In either case, other patterns may be used to obtain multiple ranges to the stationary node from multiple directions.

In the preferred embodiment described above, the tracking system has a first computer system 202 and the independent localisation system has a second computer system 320. In alternative embodiments, the functionality attributed above to the separate systems are provided by a single computer system.

Accordingly, the above described arrangements describe a method of setting up a tracking system of the type including a plurality of spaced-apart stationary nodes for tracking mobile nodes within a tracking environment. The method includes using an independent localisation system to determine respective locations of at least a subset of the stationary nodes within the tracking environment.

In particular, this allows the stationary nodes to be deployed without regard to their absolute location within the tracking environment. Subsequent to deployment, a secondary localisation system can be used to identify the location of the stationary nodes, so that the stationary nodes can subsequently be used in tracking objects or individuals within the tracking environment.

This is particularly advantageous, as it allows for rapid deployment of the stationary nodes, with their locations being determined substantially automatically for example when a suitably equipped mobile device of a mapping system or similar traverses the tracking environment. After this, mobile nodes, which typically require less hardware and hence are smaller and cheaper than the localisation system, being used to track multiple objects/people as required. This enables a tracking system to be easily and rapidly deployed with minimal manual intervention, making this ideal for use in emergency scenarios or the like.

A number of further features will now be described.

In one example, the method further includes generating a tracking coordinate system including the locations of the stationary nodes, although this is not essential and any suitable coordinate system could be used.

The method can include determining the respective locations of the stationary nodes relative to a mobile device of the independent localisation system. This can be performed using a mobile node of the tracking system associated with the mobile device in a known spatial relationship, allowing the location of the mobile device within the tracking environment can then be used to determine the location of the stationary nodes.

In one example, this is performed by time synchronising the mobile node associated with the mobile device with the independent localisation system. This allows the system to determine relative locations of the stationary nodes relative to the mobile device at the same time that the location of the mobile device is known within the tracking environment. Alternatively, the location of the mobile device and relative positions of the stationary nodes can be otherwise resolved, for example by having the mobile device identify the location of a stationary node in the tracking environment.

The determining of relative locations of the stationary nodes to the mobile device includes determining respective ranges between the mobile device and the stationary nodes.

Ranges can be determined using a variety of techniques. This can include, for example, using received signal strength of signals transmitted between the mobile node associated with the mobile device and the stationary nodes. In this case, a database of received signal strengths for signals between the stationary nodes and the mobile node associated with the mobile device when located at various locations within the tracking environment can be generated. Alternatively, this can involve generating a propagation model for the tracking system and using the model to estimate the respective ranges between the mobile node associated with the mobile device and the stationary nodes. Alternatively, ranges can be determined using time of arrival of signals transmitted between the mobile node associated with the mobile device and the stationary nodes.

In one example, ranges greater than a predetermined threshold are discarded prior to determining the locations of the stationary nodes relative to the mobile device. This can be used to avoid spurious results, as well as avoiding the use of larger ranges, which may be subject to greater measurement or calculation errors.

The locations of the stationary nodes relative to the mobile device can be determined using an algorithm which estimates the location of a stationary node by minimising the sum of the square of differences between the determined ranges and the estimated ranges assuming the stationary node is at the estimated location. In this case, the method can include, for each stationary node, estimating a location of said stationary node using a plurality of determined ranges between said stationary node and the mobile device at a corresponding plurality of determined locations, including estimating, for a current said range, the location of said stationary node and an error in said location estimate excluding said current range, discarding the range whose exclusion gave the lowest error estimate, if said lowest error estimate is less than a threshold, repeating said estimating and said discarding until said lowest error estimate is not less than said threshold or the number of undiscarded ranges reaches a minimum number; and estimating the location of said stationary node from the undiscarded ranges. Such estimating can comprise minimising a weighted sum over said ranges of the squared difference between each range and the distance between a candidate location for the stationary node and the corresponding location of the mobile device when the range was determined.

In one example, the method includes using a mapping system, such as a SLAM system, to generate a map of at least part of the tracking environment, and optionally and determine the location of a mobile device within the map. However this is not essential and other localisation systems can be used.

The process is typically performed using a one or more processing devices that determine the map using the mapping system, determine a location of the mobile device within the map using the mapping system, determine positions of the stationary nodes relative to a mobile node mounted on the mobile device using the tracking system and use the location of the mobile device within the map and the position of the stationary nodes relative to the mobile node to determine the respective locations of the at least a subset of the stationary nodes within the tracking environment.

The location of the mobile device and relative locations of the stationary nodes can be determined at a defined time, such as each time a relative location is determined, or at defined locations, such as when the mobile device is substantially coincident with or near a stationary node. This can be determined based on user input, such as a command supplied via an interface, particular motion of the mobile device, or the like.

The method typically includes, in the processing device, receiving sensor data from one or more sensors mounted on the mobile device, the sensor data being at least partially indicative of a position of the mobile device relative to the tracking environment and determining the map using the sensor data. In one example, the map is a point cloud model and where the method includes, in the at least one electronic processing device using the sensor data to determine captured points in the tracking environment to thereby generate the point cloud model. In this case, the sensor data is typically indicative of a range of at least part of the tracking environment from the mobile device, and may also optionally be indicative an orientation of the sensing device and a position of the sensing device.

The above also provides a method of setting up a tracking system of the type including a plurality of spaced-apart stationary nodes for tracking mobile nodes within a tracking environment, the method including using a simultaneous localisation and mapping device having an associated node of the tracking system to generate a map of the tracking environment and determine respective locations of at least a subset of the stationary nodes within the tracking environment.

The above also provides a system for use in setting up a tracking system of the type including a plurality of spaced-apart stationary nodes for tracking mobile nodes within a tracking environment, the system including a mobile device having associated therewith a mobile node of the tracking system for determining locations of at least a subset of the stationary nodes relative to the device, and an independent localisation system for determining the location of the device.

In this case, the system typically includes a mapping data system for generating mapping data for use in generating a map of the tracking environment. In this case, the processing device, determines the map using the mapping system, determines a location of the mobile device within the map using the mapping system, determines positions of the stationary nodes relative to a mobile node mounted on the mobile device using the tracking system and uses the location of the mobile device within the map and the position of the stationary nodes relative to the mobile node to determine the respective locations of the at least a subset of the stationary nodes within the tracking environment.

The system can include one or more sensors mounted on the mobile device that generate sensor data at least partially indicative of a position of the mobile device relative to the tracking environment.

The sensor can include one or more of a laser range finder, an optical imaging device and an inertial sensor, although other sensors could be used.

In one example, the system includes an input that allows a user to create annotations associated with the tracking environment, for example to indicate the location of a stationary node.

Tracking systems to which the invention is applicable may be used in the tracking of players on a sporting field, mobile units or personnel, such as emergency workers, miners and mining equipment in and around a mine site, construction workers working with hazards, employees within a business location and customers and/or shopping carts in a shopping mall. Embodiments of the invention find broad application therefore in the setting up of such systems. The invention has been developed particularly for the setting up of such systems in less structured or less permanent environments, although it is not limited to that use. Less structured or less permanent environments include, for example, mine sites which typically develop as material is extracted; other mining related sites (for example, spoil heaps); construction sites; and sites of accidents or natural or man-made disasters.

Throughout this specification and claims which follow, unless the context requires otherwise, the word "comprise", and variations such as "comprises" or "comprising", will be understood to imply the inclusion of a stated integer or group of integers or steps but not the exclusion of any other integer or group of integers.

## Claims

1. A method of setting up a tracking system (100) of the type including a plurality of spaced-apart stationary nodes (104) for tracking mobile nodes (102) within a tracking environment, the method including using an independent localisation system (300) to determine respective locations of at least a subset of the stationary nodes (104) within the tracking environment wherein the method includes using a mapping system (300) to generate a map of at least part of the tracking environment and wherein the independent localisation system (300) includes a mapping system for simultaneously mapping the tracking environment and determining the location of a mobile device (301) within the map and wherein the method includes, in at least one processing device (204):
determining the map using the mapping system (300); and,
determining a location of the mobile device (310) within the map using the mapping system (300), **characterised in that** the method further comprises:
determining relative locations of the stationary nodes (104) using the tracking system, the relative locations being indicative of the location of the stationary nodes (104) relative to a mobile node (102) mounted on the mobile device (301) in a known spatial relationship; and,
using the location of the mobile device (301) within the map and the relative locations of the stationary nodes (104) relative to the mobile node (102) to determine the respective locations of the at least a subset of the stationary nodes (104) within the tracking environment, so that the stationary nodes (104) can be subsequently used in tracking within the tracking environment.

2. A method as claimed in claim 1, further including at least one of:
generating a tracking coordinate system including the locations of the stationary nodes;
determining the respective locations of the stationary nodes (104) relative to a mobile device (301) of the independent localisation system (300), optionally by determining respective ranges between the mobile device (301) and the stationary nodes (104).

3. A method as claimed in claim 2, including at least one of:
time synchronising the mobile node (102) associated with the mobile device (301) with the independent localisation system (300); and,
determining the respective ranges between the mobile device (301) and the stationary nodes (104) using at least one of:
a received signal strength of signals transmitted between the mobile node (102) associated with the mobile device (301) and the stationary nodes (104); and,
a time of arrival or time difference of arrival of signals transmitted between the mobile node (102) associated with the mobile device (301) and the stationary nodes (104).

4. A method as claimed in claim 3, including at least one of:
generating a database of received signal strengths for signals between the stationary nodes (104) and the mobile node (102) associated with the mobile device (301) when located at various locations within the tracking environment; and,
generating a propagation model for the tracking system and using the model to estimate the respective ranges between the mobile node (102) associated with the mobile device (301) and the stationary nodes (104).

5. A method as claimed in any of claims 2 to 4, wherein ranges greater than a predetermined threshold are discarded prior to determining the locations of the stationary nodes (104) relative to the mobile device.

6. A method as claimed in any of claims 2 to 5, wherein the locations of the stationary nodes (104) relative to the mobile device are determined using an algorithm which estimates the location of a stationary node (104) by minimising the sum of the square of differences between the determined ranges and the estimated ranges assuming the stationary node (104) is at the estimated location.

7. A method as claimed in claim 6, including, for each stationary node (104), estimating a location of said stationary node (104) using a plurality of determined ranges between said stationary node (104) and the mobile device (301) at a corresponding plurality of determined locations, including:
estimating, for a current said range, the location of said stationary node (104) and an error in said location estimate excluding said current range;
discarding the range whose exclusion gave the lowest error estimate, if said lowest error estimate is less than a threshold;
repeating said estimating and said discarding until said lowest error estimate is not less than said threshold or the number of undiscarded ranges reaches a minimum number; and
estimating the location of said stationary node (104) from the undiscarded ranges.

8. A method as claimed in claim 7, wherein said estimating comprises minimising a weighted sum over said ranges of the squared difference between each range and the distance between a candidate location for the stationary node (104) and the corresponding location of the mobile device (301) when the range was determined.

9. A method as claimed in any one of the claims 1 to 8, wherein the location of the mobile device (301) and relative locations of the stationary nodes (104) are determined at at least one of:
a defined time; and,
a defined location.

10. A method as claimed in any one of the claims 1 to 9, wherein the method includes, in at least one processing device:
receiving sensor data from one or more sensors (302) mounted on the mobile device (301), the sensor data being at least partially indicative of a position of the mobile device (301) relative to the tracking environment and being indicative of at least one of:
a range of at least part of the tracking environment from the mobile device (301);
an orientation of the mobile device (301); and,
a position of the mobile device (301); and,
determining the map using the sensor data.

11. A method as claimed in claim 10, wherein the map is a point cloud model and where the method includes, in the at least one electronic processing device using the sensor data to determine captured points in the tracking environment to thereby generate the point cloud model.

12. A method as claimed in any one of claims 1 to 11, wherein the method includes, in at least one processing device:
receiving range data from at least one of the stationary nodes (104) and the mobile node (102), the range data being indicative of a range between the mobile node (102) and the stationary nodes (104); and,
determining the relative locations of the stationary nodes (104) using the range data.

13. A system for use in setting up a tracking system of the type including a plurality of spaced-apart stationary nodes (104) for tracking mobile nodes (102) within a tracking environment, the system including a mobile device (301) having associated therewith a mobile node (102) of the tracking system for determining locations of at least a subset of the stationary nodes (104) relative to the device, and an independent localisation system (300) for determining the location of the device, wherein the system further includes a mapping data system for generating mapping data for use in generating a map of the tracking environment and wherein the system includes at least one processing device that:
determines the map using the mapping system (300);
determines a location of the mobile device (301) within the map using the mapping system (300), **characterised in that** the at least one processing device;
determines relative locations of the stationary nodes (104) using the tracking system, the relative locations being indicative of the location of the stationary nodes (104) relative to a mobile node (102) mounted on the mobile device (301) in a known spatial relationship; and,
uses the location of the mobile device (301) within the map and the position of the stationary nodes (104) relative to the mobile node (102) to determine the respective locations of the at least a subset of the stationary nodes within the tracking environment, so that the stationary nodes (104) can be subsequently used in tracking within the tracking environment.

## Patentansprüche

1. Verfahren zum Einstellen eines Verfolgungssystems (100) von der Art, die mehrere voneinander beabstandete stationäre Knoten (104) zum Verfolgen von mobilen Knoten (102) innerhalb einer Verfolgungsumgebung beinhaltet, wobei das Verfahren ein Verwenden eines unabhängigen Standortbestimmungssystems (300) beinhaltet, um jeweilige Standorte von wenigstens einer Teilmenge der stationären Knoten (104) innerhalb der Verfolgungsumgebung zu bestimmen, wobei das Verfahren das Verwenden eines Kartensystems (300) beinhaltet, um eine Karte von wenigstens einem Teil der Verfolgungsumgebung zu erzeugen und wobei das unabhängige Standortbestimmungssystem (300) ein Kartensystem zum gleichzeitigen Kartieren der Verfolgungsumgebung und Bestimmen des Standorts einer mobilen Vorrichtung (301) innerhalb der Karte beinhaltet, und wobei das Verfahren in wenigstens einer Verarbeitungsvorrichtung (204) Folgendes beinhaltet:
Bestimmen der Karte unter Verwendung des Kartensystems (300); und
Bestimmen eines Standorts der mobilen Vorrichtung (310) innerhalb der Karte unter Verwendung des Kartensystems (300), **dadurch gekennzeichnet, dass** das Verfahren ferner Folgendes umfasst:
Bestimmen relativer Standorte der stationären Knoten (104) unter Verwendung des Verfolgungssystems, wobei die relativen Standorte die Standorte der stationären Knoten (104) bezüglich eines mobilen Knotens (102) angeben, der an der mobilen Vorrichtung (301) in einer bekannten räumlichen Beziehung angebracht ist; und
Verwenden des Standorts der mobilen Vorrichtung (301) innerhalb der Karte und der relativen Standorte der stationären Knoten (104) bezüglich des mobilen Knotens (102), um die jeweiligen Standorte der wenigstens einen Teilmenge der stationären Knoten (104) innerhalb der Verfolgungsumgebung zu bestimmen, sodass die stationären Knoten (104) anschließend beim Verfolgen innerhalb der Verfolgungsumgebung verwendet werden können.

2. Verfahren nach Anspruch 1, ferner wenigstens eines von Folgenden beinhaltend:
Erzeugen eines Verfolgungskoordinatensystems, das die Standorte der stationären Knoten beinhaltet;
Bestimmen der jeweiligen Standorte der stationären Knoten (104) bezüglich einer mobilen Vorrichtung (301) des unabhängigen Standortbestimmungssystems (300), optional durch Bestimmen jeweiliger Entfernungen zwischen der mobilen Vorrichtung (301) und den stationären Knoten (104).

3. Verfahren nach Anspruch 2, wenigstens Folgendes beinhaltend:
Zeitsynchronisieren des mobilen Knotens (102), der mit der mobilen Vorrichtung (301) verknüpft ist, mit dem unabhängigen Standortbestimmungssystem (300); und/oder
Bestimmen der jeweiligen Entfernungen zwischen der mobilen Vorrichtung (301) und den stationären Knoten (104) unter Verwendung von Folgendem:
einer empfangenen Signalstärke von Signalen, die zwischen dem mobilen Knoten (102), der mit der mobilen Vorrichtung (301) verknüpft ist, und den stationären Knoten (104) übertragen werden; und/oder
einer Ankunftszeit oder Zeitdifferenz einer Ankunft von Signalen, die zwischen dem mobilen Knoten (102), der mit der mobilen Vorrichtung (301) verknüpft ist, und den stationären Knoten (104) übertragen werden.

4. Verfahren nach Anspruch 3, wenigstens Folgendes beinhaltend:
Erzeugen einer Datenbank von empfangenen Signalstärken für Signale zwischen den stationären Knoten (104) und dem mobilen Knoten (102), die mit der mobilen Vorrichtung (301) verknüpft sind, wenn sie sich an verschiedenen Standorten innerhalb der Verfolgungsumgebung befinden; und/oder
Erzeugen eines Ausbreitungsmodells für das Verfolgungssystem und Verwenden des Modells, um die jeweiligen Entfernungen zwischen dem mobilen Knoten (102), der mit der mobilen Vorrichtung (301) verknüpft ist, und den stationären Knoten (104) zu schätzen.

5. Verfahren nach einem der Ansprüche 2 bis 4, wobei Entfernungen, die größer als ein vorbestimmter Schwellenwert sind, verworfen werden, bevor die Standorte der stationären Knoten (104) bezüglich der mobilen Vorrichtung bestimmt werden.

6. Verfahren nach einem der Ansprüche 2 bis 5, wobei die Standorte der stationären Knoten (104) bezüglich der mobilen Vorrichtung unter Verwendung eines Algorithmus bestimmt werden, der den Standort eines stationären Knotens (104) durch Minimieren der Summe des Quadrats von Differenzen zwischen den bestimmten Entfernungen und den geschätzten Entfernungen schätzt, in der Annahme, dass der stationäre Knoten (104) an dem geschätzten Standort ist.

7. Verfahren nach Anspruch 6, beinhaltend, für jeden stationären Knoten (104), das Schätzen eines Standorts des stationären Knotens (104) unter Verwendung mehrerer bestimmter Entfernungen zwischen dem stationären Knoten (104) und der mobilen Vorrichtung (301) an einer entsprechenden Vielzahl bestimmter Standorte, Folgendes beinhaltend:
Schätzen des Standorts des stationären Knotens (104) und eines Fehlers in der Standortschätzung für eine aktuelle Entfernung unter Ausschluss der aktuellen Entfernung;
Verwerfen der Entfernung, deren Ausschluss die niedrigste Fehlerschätzung ergab, wenn die niedrigste Fehlerschätzung kleiner als ein Schwellenwert ist;
Wiederholen des Schätzens und des Verwerfens, bis die niedrigste Fehlerschätzung nicht weniger als der Schwellenwert ist oder die Anzahl der nicht verworfenen Entfernungen eine minimale Anzahl erreicht; und
Schätzen des Standorts des stationären Knotens (104) aus den nicht verworfenen Entfernungen.

8. Verfahren nach Anspruch 7, wobei das Schätzen das Minimieren einer gewichteten Summe über die Entfernungen der quadrierten Differenz zwischen jeder Entfernung und dem Abstand zwischen einem Kandidatenstandort für den stationären Knoten (104) und dem entsprechenden Standort der mobilen Vorrichtung (301) umfasst, wenn die Entfernung bestimmt wurde.

9. Verfahren nach einem der Ansprüche 1 bis 8, wobei der Standort der mobilen Vorrichtung (301) und die relativen Standorte der stationären Knoten (104) an Folgendem bestimmt werden:
einer definierten Zeit; und/oder
einem definierten Standort.

10. Verfahren nach einem der Ansprüche 1 bis 9, wobei das Verfahren in wenigstens einer Verarbeitungsvorrichtung Folgendes beinhaltet:
Empfangen von Sensordaten von einem oder mehreren Sensoren (302), die an der mobilen Vorrichtung (301) angebracht sind, wobei die Sensordaten wenigstens teilweise eine Position der mobilen Vorrichtung (301) bezüglich der Verfolgungsumgebung angeben und Folgendes angeben:
eine Entfernung von wenigstens einem Teil der Verfolgungsumgebung von der mobilen Vorrichtung (301);
eine Ausrichtung der mobilen Vorrichtung (301); und
eine Position der mobilen Vorrichtung (301); und/oder
Bestimmen der Karte unter Verwendung der Sensordaten.

11. Verfahren nach Anspruch 10, wobei die Karte ein Punktwolkenmodell ist, und wobei das Verfahren Folgendes beinhaltet: in der wenigstens einen elektronischen Verarbeitungsvorrichtung, unter Verwendung der Sensordaten, Bestimmen von erfassten Punkten in der Verfolgungsumgebung, um dadurch das Punktwolkenmodell zu erzeugen.

12. Verfahren nach einem der Ansprüche 1 bis 11, wobei das Verfahren in wenigstens einer Verarbeitungsvorrichtung Folgendes beinhaltet:
Empfangen von Entfernungsdaten von dem stationären Knoten (104) und/oder dem mobilen Knoten (102), wobei die Entfernungsdaten eine Entfernung zwischen dem mobilen Knoten (102) und den stationären Knoten (104) angeben; und
Bestimmen der relativen Standorte der stationären Knoten (104) unter Verwendung der Entfernungsdaten.

13. System zum Verwenden beim Einstellen eines Verfolgungssystems von der Art, die mehrere voneinander beabstandete stationäre Knoten (104) zum Verfolgen von mobilen Knoten (102) innerhalb einer Verfolgungsumgebung beinhaltet, wobei das System eine mobile Vorrichtung (301) mit einem damit verknüpften mobilen Knoten (102) des Verfolgungssystems zum Bestimmen von Standorten wenigstens einer Teilmenge der stationären Knoten (104) bezüglich der Vorrichtung und ein unabhängiges Standortbestimmungssystem (300) zum Bestimmen des Standorts der Vorrichtung beinhaltet, wobei das System ferner ein Kartendatensystem zum Erzeugen von Kartendaten zur Verwendung beim Erzeugen einer Karte der Verfolgungsumgebung beinhaltet und wobei das System wenigstens eine Verarbeitungsvorrichtung beinhaltet, die:
die Karte unter Verwendung des Kartensystems (300) bestimmt;
einen Standort der mobilen Vorrichtung (301) innerhalb der Karte unter Verwendung des Kartensystems (300) bestimmt, **dadurch gekennzeichnet, dass** die wenigstens eine Verarbeitungsvorrichtung;
relative Standorte der stationären Knoten (104) unter Verwendung des Verfolgungssystems bestimmt, wobei die relativen Standorte die Standorte der stationären Knoten (104) bezüglich eines mobilen Knotens (102) angeben, der auf der mobilen Vorrichtung (301) in einer bekannten räumlichen Beziehung angebracht ist; und
den Standort der mobilen Vorrichtung (301) innerhalb der Karte und die Position der stationären Knoten (104) bezüglich des mobilen Knotens (102) verwendet, um die jeweiligen Standorte der wenigstens einen Teilmenge der stationären Knoten innerhalb der Verfolgungsumgebung zu bestimmen, sodass die stationären Knoten (104) anschließend beim Verfolgen innerhalb der Verfolgungsumgebung verwendet werden können.

## Revendications

1. Procédé de mise en place d'un système de suivi (100) du type comportant une pluralité de nœuds stationnaires espacés les uns des autres (104) servant à localiser des nœuds mobiles (102) au sein d'un environnement de suivi, le procédé comportant l'utilisation d'un système de suivi indépendant (300) afin de déterminer des emplacements respectifs d'au moins un sous-ensemble des nœuds stationnaires (104) au sein de l'environnement de suivi, dans lequel le procédé comporte l'utilisation d'un système de cartographie (300) afin de générer une carte d'au moins une partie de l'environnement de suivi, et dans lequel le système de suivi indépendant (300) comporte un système de cartographie servant simultanément à cartographier l'environnement de suivi et à déterminer l'emplacement d'un dispositif mobile (301) au sein de la carte, et dans lequel le procédé comporte, dans au moins un dispositif de traitement (204) :
la détermination de la carte à l'aide du système de cartographie (300) ; et,
la détermination d'un emplacement du dispositif mobile (310) au sein de la carte à l'aide du système de cartographie (300), **caractérisé en ce que** le procédé comprend en outre :
la détermination d'emplacements relatifs des nœuds stationnaires (104) à l'aide du système de suivi, les emplacements relatifs indiquant l'emplacement des nœuds stationnaires (104) par rapport à un nœud mobile (102) monté sur le dispositif mobile (301), leur relation spatiale étant connue ; et,
l'utilisation de l'emplacement du dispositif mobile (301) au sein de la carte et les emplacements relatifs des nœuds stationnaires (104) par rapport au nœud mobile (102) afin de déterminer les emplacements respectifs dudit au moins un sous-ensemble des nœuds stationnaires (104) au sein de l'environnement de suivi, de sorte que les nœuds stationnaires (104) peuvent être subséquemment utilisés pour exécuter un suivi au sein de l'environnement de suivi.

2. Procédé selon la revendication 1, comportant en outre au moins l'une parmi :
la génération d'un système de coordonnées de suivi comportant les emplacements des nœuds stationnaires ;
la détermination des emplacements respectifs des nœuds stationnaires (104) par rapport à un dispositif mobile (301) du système de suivi indépendant (300), éventuellement par la détermination des distances respectives entre le dispositif mobile (301) et les nœuds stationnaires (104).

3. Procédé selon la revendication 2, comportant au moins l'un parmi :
la synchronisation temporelle du nœud mobile (102) associé au dispositif mobile (301) avec le système de suivi indépendant (300) ; et,
la détermination des distances respectives entre le dispositif mobile (301) et les nœuds stationnaires (104) à l'aide d'au moins l'un parmi :
une intensité de signal reçu relative à des signaux émis entre le nœud mobile (102) associé au dispositif mobile (301) et les nœuds stationnaires (104) ; et,
un temps d'arrivée ou une différence de temps d'arrivée de signaux émis entre le nœud mobile (102) associé au dispositif mobile (301) et les nœuds stationnaires (104).

4. Procédé selon la revendication 3, comportant au moins l'une parmi :
la génération d'une base de données d'intensités de signal reçu relative à des signaux entre les nœuds stationnaires (104) et le nœud mobile (102) associé au dispositif mobile (301) lorsqu'il est situé à divers emplacements au sein de l'environnement de suivi ; et,
la génération d'un modèle de propagation pour le système de suivi et l'utilisation du modèle afin d'estimer les distances respectives entre le nœud mobile (102) associé au dispositif mobile (301) et les nœuds stationnaires (104).

5. Procédé selon l'une quelconque des revendications 2 à 4, dans lequel les distances supérieures à un seuil prédéterminé sont exclues avant la détermination des emplacements des nœuds stationnaires (104) par rapport au dispositif mobile.

6. Procédé selon l'une quelconque des revendications 2 à 5, dans lequel les emplacements des nœuds stationnaires (104) par rapport au dispositif mobile sont déterminés à l'aide d'un algorithme qui estime l'emplacement d'un nœud stationnaire (104) en minimisant la somme du carré des différences entre les distances déterminées et les distances estimées, en supposant que le nœud stationnaire (104) se trouve à l'emplacement estimé.

7. Procédé selon la revendication 6, comportant, concernant chaque nœud stationnaire (104), l'estimation d'un emplacement dudit nœud stationnaire (104) à l'aide d'une pluralité de distances déterminées entre ledit nœud stationnaire (104) et le dispositif mobile (301) à une pluralité correspondante d'emplacements déterminés, comportant :
l'estimation, relative à une dite distance actuelle, l'emplacement dudit nœud stationnaire (104) et une erreur dans ladite estimation de l'emplacement excluant ladite distance actuelle ;
l'élimination de la distance dont l'exclusion a donné l'estimation d'erreur la plus faible, si ladite estimation d'erreur la plus basse est inférieure à un seuil ;
la répétition de ladite estimation et de ladite élimination jusqu'à ce que ladite estimation d'erreur la plus basse ne soit pas inférieure audit seuil ou que le nombre de distances non éliminées atteigne un nombre minimal ; et
l'estimation de l'emplacement dudit nœud stationnaire (104) à partir des distances non éliminées.

8. Procédé selon la revendication 7, dans lequel ladite estimation comprend la minimisation d'une somme pondérée, sur lesdites distances, de la différence au carré entre chaque distance et la distance entre un emplacement candidat pour le nœud stationnaire (104) et l'emplacement correspondant du dispositif mobile (301) lorsque la distance a été déterminée.

9. Procédé selon l'une quelconque des revendications 1 à 8, dans lequel l'emplacement du dispositif mobile (301) et les emplacements relatifs des nœuds stationnaires (104) sont déterminés à au moins l'un parmi :
un temps défini ; et,
un emplacement défini.

10. Procédé selon l'une quelconque des revendications 1 à 9, dans lequel le procédé comporte, dans au moins un dispositif de traitement :
la réception de données de capteur à partir d'un ou plusieurs capteurs (302) montés sur le dispositif mobile (301), les données de capteur indiquant au moins partiellement une position du dispositif mobile (301) par rapport à l'environnement de suivi, et indiquant au moins l'une parmi :
une distance d'au moins une partie de l'environnement de suivi à partir du dispositif mobile (301) ;
une orientation du dispositif mobile (301) ; et,
une position du dispositif mobile (301) ; et,
la détermination de la carte à l'aide des données de capteur.

11. Procédé selon la revendication 10, dans lequel la carte est un modèle en nuage de points et où le procédé comporte l'utilisation des données de capteur dans ledit au moins un dispositif de traitement électronique afin de déterminer des points capturés dans l'environnement de suivi afin de générer ainsi le modèle en nuage de points.

12. Procédé selon l'une quelconque des revendications 1 à 11, dans lequel le procédé comporte, dans au moins un dispositif de traitement :
la réception de données de distance à partir d'au moins l'un des nœuds stationnaires (104) et du nœud mobile (102), les données de distance indiquant une distance entre le nœud mobile (102) et les nœuds stationnaires (104) ; et,
la détermination des emplacements relatifs des nœuds stationnaires (104) à l'aide des données de distance.

13. Système destiné à être utilisé pour mettre en place un système de suivi du type comportant une pluralité de nœuds stationnaires espacés les uns des autres (104) servant à localiser des nœuds mobiles (102) au sein d'un environnement de suivi, le système comportant un dispositif mobile (301) auquel est associé un nœud mobile (102) du système de suivi servant à déterminer les emplacements d'au moins un sous-ensemble des nœuds stationnaires (104) par rapport au dispositif, et un système de suivi indépendant (300) servant à déterminer l'emplacement du dispositif, dans lequel le système comporte en outre un système de données de cartographie servant à générer des données de cartographie destinées à être utilisées pour générer une carte de l'environnement de suivi, et dans lequel le système comporte au moins un dispositif de traitement qui :
détermine la carte à l'aide du système de cartographie (300) ;
détermine un emplacement du dispositif mobile (301) au sein de la carte à l'aide du système de cartographie (300), **caractérisé en ce que** ledit au moins un dispositif de traitement :
détermine des emplacements relatifs des nœuds stationnaires (104) à l'aide du système de suivi, les emplacements relatifs indiquant l'emplacement des nœuds stationnaires (104) par rapport à un nœud mobile (102) monté sur le dispositif mobile (301), leur relation spatiale étant connue ; et,
utilise l'emplacement du dispositif mobile (301) au sein de la carte et la position des nœuds stationnaires (104) par rapport au nœud mobile (102) afin de déterminer les emplacements respectifs dudit au moins un sous-ensemble des nœuds stationnaires au sein de l'environnement de suivi, de sorte que les nœuds stationnaires (104) peuvent être subséquemment utilisés pour exécuter un suivi au sein de l'environnement de suivi.
